# EUROPEAN PATENT SPECIFICATION

(11) **EP 2 243 638 B1**
(45) Date of publication and mention of the grant of the patent: **08.11.2017**
(21) Application number: 10160562.4
(22) Date of filing: 21.04.2010
(51) Int. Cl.: B60C 11/16, B60C 11/03

(54) **Method for designing a studded tyre and according studded tyre**
Methode des Spikereifen-Designs und entsprechender Spikereifen
Méthode de conception d'un pneu clouté et pneu clouté correspondant

(30) Priority: 24.04.2009 IT PD20090108
(43) Date of publication of application: 27.10.2010
(73) Proprietor: Pirelli Tyre S.p.A., 20126 Milano (IT)
(72) Inventor: Boiocchi, Maurizio, I-20126, MILANO (IT); Matrascia, Giuseppe, I-20126, MILANO (IT); Trombin, Andrea, I-45100 Rovigo (IT)
(74) Representative: Susanetto, Carlo

(56) References cited:
- EP-A2- 1 129 869
- GB-A- 1 546 780
- JP-A- 63 053 101

## Description

The present invention relates to a method for designing a studded tyre in which the studs are disposed on a tread band of the tyre in a configuration which makes it possible to provide a grip on the icy roadbed which is substantially constant along the development of the tread band, thus improving the performance of the tyre both during braking and during traction. The invention also concerns a studded tyre obtained in accordance with the method.

It is known that the road holding of a tyre on an icy surface is made particularly difficult by the reduced coefficient of friction of the ice. In order to remedy this drawback, it is also known to use tyres on the tread band of which there are suitably fixed protruding studs, capable of biting into the icy surface, and thus of providing the tyre with sufficient grip.

The use of studded tyres, where permitted, is subject to standard specifications which limit their maximum number, the weight and the dimension of the studs, and also the maximum pressure to which they can be subjected. In addition, the standard also regulates their positioning within the tread band, forming a free, median, zone which must be devoid of studs. In particular, within the meaning of the Canadian and Scandinavian standards, provision is made for the free zone to extend symmetrically from an equatorial axis of the tread band for an overall measurement of one third of the measurement of the entire tread width.

In this way, there are formed, at the symmetrically opposite side of the equatorial axis, a first and a second lateral portion of tread band involved by the arrangement of the studs.

The arrangement of the studs on the tread band is typically established semi-empirically, by seeking to exploit to the best degree the configuration of the tread pattern, generally already determined, within the limits imposed by the standards.

In particular, the studs are positioned in the region of the blocks of the tread band in such a way as to meet the following criteria:
- obtaining the maximum number of studs permitted by the standard,
- covering the greatest possible area inside the lateral portions,
- fixing the studs in such a manner that the studs on the same circumferential track are spaced as far apart as possible from one another, so as to avoid it being possible for them to be located at the same time on the same footprint area.

It is pointed out that, in the present context, the term "equatorial axis" is intended to refer to the circumference which extends round the outer surface of the tread band halfway along its axial length, while "tread width" means the axial extent of the tread band involved by a tread pattern as defined by the alternation of blocks and grooves.

It is also pointed out that, in the present context, the term "footprint area" is intended to identify the portion of tread band in contact with the roadbed during the revolution of the tyre. It should be noted that the footprint area does not assume a fixed geometric configuration, but, on the contrary, depends on different parameters which are variable over time, including the inflation pressure of the tyre, the load to which it is subjected, the roadbed and the driving conditions.

In the present context, the term "modular extent", referred for example to a pattern or to a curve, is intended to mean a curve or a pattern in which there are one or more portions (modules) repeated in succession identically to one another. In a very similar manner, the term "modular succession", referred for example to a group of components of the tread band, means a group of components in which there are one or more subassemblies (modules) repeated in succession identically to one another.

In addition, the term "row of blocks" is intended to mean an assembly of blocks which are formed on the tread band and which correspond to one another in an axial direction of the tyre. In practice, the blocks belonging to the same row will be aligned with one another in the axial direction except for a circumferential offset between the blocks which are formed on the two opposed shoulders of the tread band, and which is generally present on the tread band in order to reduce noise and vibration of the tyre when rolling.

It is further pointed out that a pair of corresponding studs is defined as "substantially belonging to the same radial plane" when the circumferential offset between the studs of the pair is comprised within the measurement of a pitch of the blocks which form the tread band.

Moreover, a tyre is defined as "directional symmetrical" when its tread pattern is symmetrical and specular with respect to the equatorial axis and has a preferred rolling direction.

JP 63-053101, EP 1129869 and GB 1546780 show respective studded tyres in which the studs are arranged at the first and second lateral portion according to various configurations. The studded tyre model named "Hakkapeliitta 5" produced and marketed by the company Nokian has a directional symmetrical pattern and a constant number of studs in engagement in a footprint area.

The tyre model "Viking 2" produced and marketed by the company Continental has an asymmetric pattern with a number of studs in engagement in a footprint area which is not constant, with positioning of a different number of studs between the inner shoulder and the outer shoulder.

The Applicant has verified that the grip of the individual studs on the icy roadbed depends, other conditions being equal, on the position of the stud with respect to the equatorial axis: in particular, the Applicant has verified that studs arranged at a greater distance from the equatorial axis exert a greater grip during braking, while studs arranged at a lesser distance from the equatorial axis exert a greater grip during traction. Consequently, a braking action carried out at an area of contact between tyre and roadbed (the aforesaid "footprint area") in which there are more studs spaced apart from the equatorial axis will be more effective than a braking action carried out in a different footprint area where the studs present are closer to the equatorial axis. Similarly, traction will be more effective when carried out at a footprint area in which there are studs which are closer to the equatorial axis.

In addition, the Applicant has observed that differences, even if limited over time, in the grip of the studded tyre on the icy roadbed during braking or traction, may have a negative effect on the electronic systems of the vehicle which are arranged for their control, such as, for example, ABS and TCS or ASR. In fact, the action exerted by the aforesaid control systems is also calibrated according to the data acquired by the systems in relation to the gripping force of the tyre on the roadbed, so that continuous variation of that force during the revolution of the tyre may cause an incorrect response of the control systems, actually rendering them ineffective.

The Applicant therefore perceived that a studded tyre which had an arrangement of the studs on the tread band such as to ensure a substantially constant gripping force on the icy roadbed during the revolution of the tyre, would remedy the drawback mentioned above, keeping the electronic control systems for braking and traction effective.

The Applicant therefore found that by arranging the studs inside each lateral portion of the tread band following a course derived by the same ideal arrangement previously provided, from which to derive the order of circumferential tracks on which to fix the successive studs starting from an initial row of blocks, a studded tyre is obtained which is capable of exerting, on the icy roadbed, a uniform grip and therefore improved performance both during braking and during traction.

More precisely, with this method the Applicant obtained a studded tyre in which there are pairs of corresponding studs, each pair formed of a stud fixed on the first lateral portion and a stud fixed on the second lateral portion, substantially at the same radial plane, in such a manner that the sum of the distances from the equatorial axis of the studs in each of said pairs of corresponding studs is kept substantially constant, so that, for each pair of corresponding studs, the grip exerted on the roadbed is substantially uniform.

In particular, in a first aspect thereof, the invention relates to a method for designing a studded tyre, comprising a step of provision of an ideal arrangement of distribution of a plurality of studs on a tread band and a step of implementation of said ideal arrangement on a real tread band of said tyre, wherein said step of provision of an ideal arrangement includes the steps of:
- defining a predetermined number of horizontal parallel lines,
- defining at least a first base curve which intersects with said horizontal parallel lines at a plurality of intersection points,
- selecting from said plurality a group of successive intersection points,
and wherein said implementation step includes the steps of:
- providing a tread band on which there are defined a first and a second lateral portion which are symmetrically opposed with respect to an equatorial axis of said tyre,
- defining, on each of said first and second lateral portions, a plurality of circumferential tracks which are spaced apart from said equatorial axis and which correspond to said horizontal parallel lines,
- fixing a first plurality of studs along the circumferential tracks inside said first lateral portion, from an initial row of blocks, in which said studs are fixed in succession along circumferential tracks which are identified in accordance with the order defined by said group of successive intersection points,
- fixing a second plurality of studs along the circumferential tracks inside said second lateral portion, from said initial row of blocks, in which said studs are fixed in succession along circumferential tracks which are identified in accordance with the order defined by said group of successive intersection points and in accordance with the same rows of blocks which are involved by said first plurality of studs.

In this way, a tyre tread is obtained in which the disposition of the studs on one and the other lateral portion of the tread band reflects the ideal arrangement of disposition of the studs. This does not necessarily mean that the course of the studs on the two lateral portions are perfectly identical to the ideal arrangement, nor that they are perfectly identical to one another, however, the disposition of the studs, while taking into necessary consideration the tread pattern and the consequent positioning of the blocks, follows courses which are indeed very similar inside the two lateral portions.

In particular, this results in the fact that the disposition of the studs inside the two lateral portions is such as to permit the identification of pairs of corresponding studs, each pair being defined by a stud respectively on one and on the other lateral portion, wherein the sum of the distances from the equatorial axis of the tyre is kept substantially constant.

Moreover, in a second aspect thereof, the invention relates to a studded tyre according to claim 10.

In this way, variations in the distance from the equatorial axis of studs belonging to one lateral portion are compensated by similar variations brought into being in the corresponding studs belonging to the other lateral portion. In other words, each pair of corresponding studs exerts a grip independent of the specific position of the studs which form it.

The present invention, in at least one of the aforesaid aspects, may exhibit at least one of the preferred features indicated hereinafter.

According to a first preferred feature, the circumferential tracks formed respectively inside said first lateral portion are specularly symmetrical, with respect to said equatorial axis, relative to the circumferential tracks which are formed inside said second lateral portion.

In this way, the identification of the circumferential tracks on the two lateral portions is facilitated in the case where the tyres have a tread pattern which is specularly symmetrical with respect to the equatorial axis, a feature which is common to a large majority of the tyre models on the market.

In addition, preferably, said circumferential tracks are defined inside said first and second lateral portions so as to involve circumferentially successive blocks which are formed on said tread band.

In this way, the positioning of the studs at blocks of the tread band is facilitated, avoiding gaps and grooves, thereby imparting greater mechanical stability to the fixing of the studs.

Preferably, said first base curve is of modular extent.

More preferably, said first base curve is of sinusoidal extent.

In this way, the studs along the circumferential development of the tread band are distributed more homogeneously inside the lateral portions and along the circumferential development of the tread band.

According to a further preferred feature, said group of successive intersection points is selected so that, for each module of said first base curve, there is selected one and only one intersection point belonging to each horizontal line.

In this way, all the circumferential tracks are involved and, above all, the distances between studs fixed on the same circumferential track are maximised.

Preferably, in said horizontal parallel lines, there are identified a first and a second horizontal line, which are external, and a plurality of intermediate horizontal lines, which are between said first and second horizontal lines, and said first base curve extends between said first and second horizontal lines.

Moreover, it is preferred that said group of successive intersection points is formed by the intersection points of said first base curve with respect to said first and second horizontal lines and, in alternating succession, by the intersection points of said first base curve with respect to said intermediate horizontal lines.

In this way a group of successive intersection points is obtained in which, for each module, only one intersection point is selected for each horizontal line, with the advantages previously described.

According to another preferred feature, in said ideal arrangement there is further defined a second base curve which intersects said horizontal parallel lines at a plurality of intersection points and said group of successive intersection points comprises intersection points with respect to said horizontal parallel lines of both said first base curve and said second base curve.

The introduction of a second curve into the ideal arrangement implemented in the real tread band makes it possible to avoid there being, in defined regions of the latter, a distribution of studs which are displaced more towards one of the two shoulders of the tyre, with a risk of skidding of the tyre to the right or to the left, particularly during braking.

Preferably, said second base curve is identical to said first base curve and horizontally offset with respect to said first base curve.

In addition, it is particularly preferred that the intersection points of said second base curve with said horizontal parallel lines are selected so as to form part of said group of successive intersection points with the same methods used in order to select the intersection points of said first base curve with said horizontal parallel lines.

In this way an ideal arrangement is obtained which, once it is implemented on a real tread band, makes it possible to obtain studded tyres having optimum behaviour both during traction and during braking.

According to a further preferred feature, for each row of blocks of said tread band there is fixed the same number of studs of said first plurality.

More preferably, for each row of blocks of said tread band there is fixed only one stud of said first plurality.

In this way, a constant number of studs is obtained for each region of the tread band with an equal number of rows of blocks.

Preferably, each stud of said first plurality is spaced apart by at least five rows of blocks from any other stud which is fixed on the same circumferential track.

Thus, in a footprint area having a measurement of less than five rows of blocks, there is never more than one stud in circumferential alignment.

According to another preferred feature, said horizontal parallel lines are even in number.

More preferably, said horizontal parallel lines are six in number.

It is moreover preferred that a directional tread pattern is formed on said tread band.

According to a preferred feature, each stud of said second plurality, when in a footprint area, is axially offset with respect to the other studs of said second plurality present in the same footprint area.

In this way it is advantageously avoided that studs that are relatively close together are found to stay on the same trajectory, which could result in the undesirable possibility of forming a furrow on the icy roadbed.

Such a situation, which is typical during braking with blocking of the wheels, leads to a drastic reduction in the grip of the successive stud which actually tends to be channelled into the furrow already made, without biting into the icy roadbed.

According to a preferred feature, said first plurality of studs is fixed, from an initial row of blocks, in modular succession along the circumferential development of said tread band.

According to a further preferred feature, said second plurality of studs is fixed, from an initial row of blocks, in modular succession along the circumferential development of said tread band.

In this way the tyre advantageously exhibits a more homogeneous and uniform behaviour in its rolling motion on the roadbed.

Preferably, each stud of said first and second pluralities is fixed on a respective block which is formed on said tread band.

This feature makes it possible not to weaken the structure of the block with an excessive number of studs fixed thereto.

It is further preferred that said first and second pluralities of studs are fixed on said tread band in such a way that the number of studs present in a footprint area is constant except for a pair of corresponding studs.

More preferably, the number of studs present in a footprint area is constant.

Owing to this advantageous feature, the gripping force exerted by the tyre in a footprint area is substantially constant, thus permitting more effective action both during braking and during traction and, moreover, improved management of the electronic braking and traction control systems. It will be appreciated that the above advantageous feature is obtained also in case of variation of footprint area, due, for instance, to a variation in inflation pressure of the tyre, in the load to which it is subjected, in the roadbed or in the driving conditions.

Preferably, said tread band comprises a first plurality of blocks which are provided in succession along the circumferential development of said tread band at said first lateral portion, a second plurality of blocks which are provided in succession along the circumferential development of said tread band at said second lateral portion, there corresponding to each block of said first plurality at least one block of said second plurality, substantially belonging to the same radial plane, so as to form a row of blocks, there being fixed to each row of blocks the same number of pairs of corresponding studs.

In this way, circumferential portions of tread band comprising the same number of rows of blocks exhibit the same grip on the icy roadbed.

Even more preferably, a single pair of corresponding studs is fixed to each row of blocks.

By means of this latter feature, improved distribution of studs on the tread band is obtained, also taking into account the maximum number of studs fixable on the tread band according to the standards.

Preferably, the studs of said first plurality are fixed at a predetermined number of circumferential tracks which are spaced apart from said equatorial axis inside said first lateral portion.

More preferably, the circumferential tracks which are formed inside said first lateral portion, respectively, are specularly symmetrical, with respect to said equatorial axis, relative to circumferential tracks which are formed inside said second lateral portion.

In this way the identification of the circumferential tracks on the two lateral portions is facilitated in the case where the tyres have a tread pattern which is specularly symmetrical with respect to the equatorial axis.

According to a further preferred feature, the studs of said first plurality are fixed, from an initial row of blocks, successively along the circumferential development of said tread band in accordance with a first base curve of modular extent.

In this way, the disposition of the studs along the circumferential development of the tread band is ordered and repetitive, permitting substantially uniform distribution of the grip along the tread band.

Preferably, said first base curve extends between a first circumferential track, which is axially internal, at a shorter distance from said equatorial axis, and a second circumferential track, which is axially external, at a greater distance from said equatorial axis.

More preferably, said first base curve is a sinusoidal curve.

According to a further preferred feature, the studs of said first plurality are positioned at intersection points of said first base curve with said circumferential tracks.

Moreover, it is preferred that said circumferential tracks inside said first lateral portion are even in number.

Even more preferably, said circumferential tracks are six in number.

Preferably, the studs of said first plurality are positioned at the intersection points of said first base curve with said first and second circumferential tracks and, in alternating succession, at intersection points of said first base curve with intermediate circumferential tracks between said first and second circumferential tracks.

Owing to the configuration thus obtained, a studded tyre is obtained which exhibits an optimum balance between the grip characteristics during braking and the grip characteristics during traction.

Preferably, in addition, the studs of said first plurality are positioned at intersection points of said circumferential tracks with said first base curve and with a second base curve of modular extent.

The introduction of a second curve of modular extent makes it possible to avoid that in specific tread band regions there is a distribution of studs which are displaced more towards one of the two shoulders of the tyre, with the risk of the tyre skidding to the right or to the left, particularly during braking.

Preferably, said second base curve has the same module as said first base curve.

Moreover, said second base curve has the same magnitude as said first base curve.

More preferably, said second base curve is displaced with respect to said first base curve.

Even more preferably, said second base curve, except for said displacement, is identical to said first base curve.

Preferably, the studs of said first plurality are positioned at the intersection points of said first and second base curves with said first and second circumferential tracks and, in alternating succession, at intersection points of said first and second base curve with intermediate circumferential tracks between said first and second circumferential tracks.

With the configuration thus obtained, the tyre has a very balanced distribution of the studs on the tread band, which improves its behaviour both during braking and during traction.

Preferably, said sum of the distances of the studs from said equatorial axis of each of said pairs of corresponding studs is kept between 95% and 105% of said mean value.

The features and advantages of the invention will become clearer from the detailed description of some preferred exemplary embodiments thereof, illustrated by way of non-limiting example with reference to the appended drawings, in which:
- Figure 1 is a schematic view of the development on one plane of a significant region of tread band of a first example of a studded tyre designed in accordance with the method of the present invention,
- Figure 2 is a schematic view on an enlarged scale of a portion of the region of Figure 1 indicated by II,
- Figure 3 is a diagram illustrating a first ideal arrangement of distribution of studs on a portion of tread band in accordance with the method of the present invention,
- Figure 4 is a diagram illustrating an ideal arrangement of distribution of studs on a portion of tread band representing the first example of a studded tyre of Figure 1,
- Figures 5a to 5c are diagrams illustrating the variation in the number of studs in engagement on an icy roadbed during the rolling of the studded tyre of Figure 1, taking into consideration footprint areas of different geometric configurations,
- Figure 6 is a schematic view of the development on one plane of a significant region of tread band of a second example of a studded tyre designed in accordance with the method of the present invention,
- Figures 7a and 7b are diagrams illustrating the results of the performance, respectively during braking and during traction, of the studded tyre of Figure 6 compared with a studded tyre of Figure 8,
- Figure 8 is a schematic view of the development on one plane of a significant region of tread band of an example of a studded tyre designed according to the prior art, having the same tread pattern as the studded tyre of Figure 6.

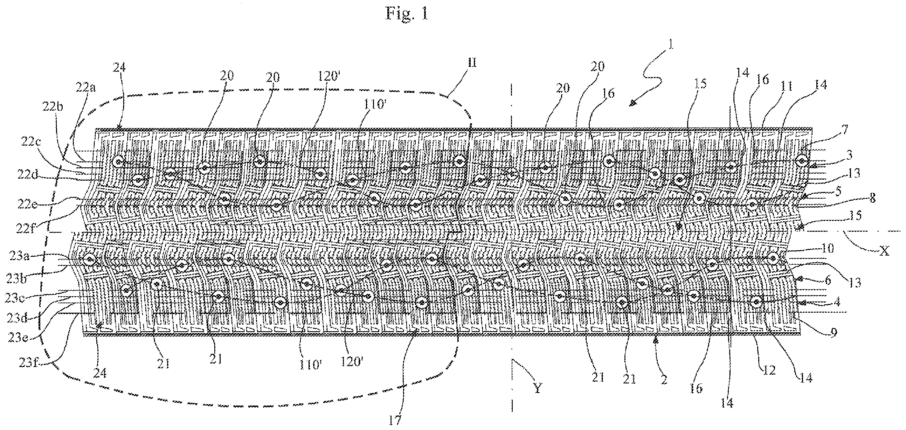

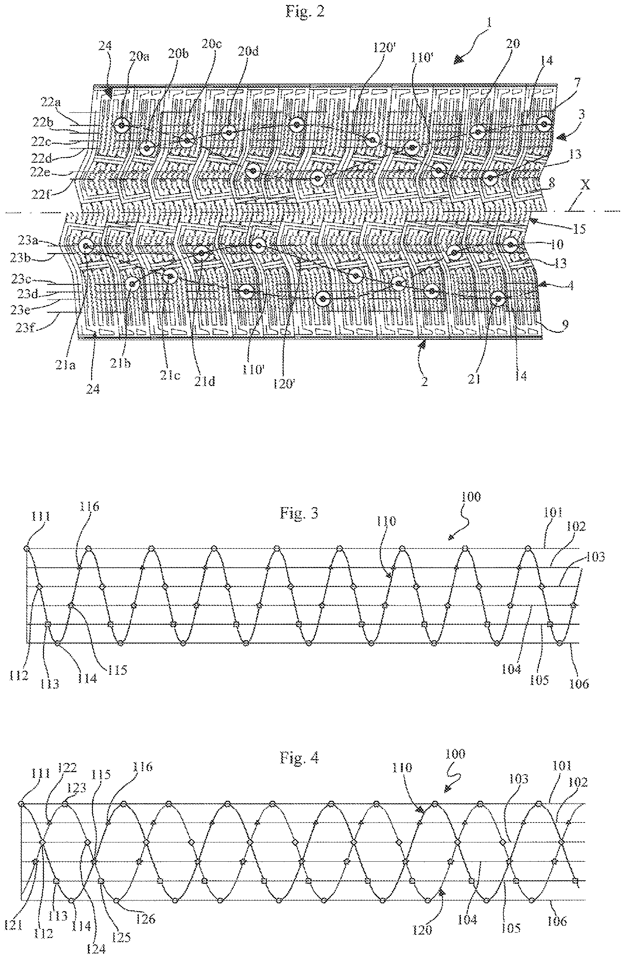

With reference to Figures 1 and 2, the reference 1 indicates overall a first example of a studded tyre designed in accordance with the method of the present invention.

The tyre 1 comprises a tyre structure, which is conventional per se and not shown in the appended drawings, and also a tread band 2, disposed in a radially external position on the tyre and arranged to come into contact with the roadbed on which the tyre 1 is intended to roll.

On the tread band 2 there are defined, at the symmetrically opposite side with respect to an equatorial axis X of the tread band 2, a first and a second lateral portion indicated respectively by 3 and 4.

On the tread band 2 there is further formed a first and a second plurality of blocks, indicated respectively by 5 and 6, which are disposed in succession along the circumferential development of the tread band 2 at the first lateral portion 3 and, respectively, at the second lateral portion 4.

The first and second pluralities of blocks 5, 6 are formed substantially symmetrically with respect to the equatorial axis X, so that there corresponds, to each block of the first plurality 5, a block of the second plurality 6 substantially belonging to the same radial plane of the tyre 1.

Blocks of the first and second pluralities 5, 6 thus identified, form a row of blocks.

In the first preferred example described herein, for each row of blocks there are formed a first and a second block 7 and 8, substantially aligned with each other in an axial direction Y of the tyre 1 and belonging to the first plurality of blocks 5, and, correspondingly, a first and a second block 9, 10 substantially aligned with each other in the axial direction Y and belonging to the second plurality of blocks 6.

The first blocks 7 and 9 of each plurality of blocks 5 and 6 extend, in an axially external position, from opposed shoulders 11 and 12 of the tread band 2 towards the equatorial axis X, while the second blocks 8 and 10 of each plurality of blocks 5 and 6 extend in an axially internal position from the first blocks 7, 9 towards the equatorial axis X.

Each first block 7, 9 is separated from the second block 8, 10 aligned therewith, by a gap 13, while each pair of first and second blocks 7, 8 or 9, 10 is separated from the pairs of first and second blocks circumferentially successive thereto by grooves 14.

Each pair of first and second blocks 7, 8 has a geometric configuration substantially identical to that of the other pairs of first and second blocks 7, 8 belonging to the first plurality of blocks 5, even if, in order to reduce the noise and vibration of the tyre, their circumferential measurements are generally different. In a very similar manner, this consideration is valid for each pair of first and second blocks 9, 10 belonging to the second plurality of blocks 6.

In particular, the blocks of the first and second pluralities 5, 6 may have a first or second circumferential length, greater than the first circumferential length.

In order still to contain the noise and vibration of the tyre 1 during its rolling motion on the roadbed, provision is made for the blocks 7 and 8 belonging to the first lateral portion 3 to be circumferentially displaced with respect to the blocks 9, 10 of the same row of blocks belonging to the second lateral portion 4.

The whole of this circumferential displacement is a fraction of the first circumferential length of the blocks, preferably between 10% and 50% of their orthogonal projection on the equatorial axis X.

On the tread band 2 there is further defined a free zone 15, extending along the entire circumferential development of the tread band 2, symmetrically with respect to the equatorial axis X, for an overall axial measurement equal to around one third of the measurement of the tread width.

Both in the free zone 15 and in the blocks of the first and second pluralities 5, 6 there are formed sipes, all indicated by 16, to allow the tyre 1 to grip on a snow-covered roadbed.

The whole formed by the blocks of the first and second pluralities 5, 6, the grooves 14, the gaps 13 and the sipes 16 defines a tread pattern 17 of the tread band 2.

The tyre 1 further comprises a first plurality of studs 20 fixed in succession along the circumferential development of the tread band 2 inside the first lateral portion 3, and a second plurality of studs 21 fixed in succession along the circumferential development of the tread band 2, inside the second lateral portion 4.

The studs 20 and 21 may be formed with any material, configuration and dimension provided that they are suitable for the purpose and are preferably disposed inside the first and second lateral portions 3, 4 without however involving the free zone 15, in accordance with the standards in force in some countries.

To each stud 20 of the first plurality there corresponds a stud 21 of the second plurality, substantially belonging to the same radial plane, so that on the tread band 2 there are formed pairs of corresponding studs, indicated more clearly in Figure 2 by 20a, 21a; 20b, 21b; 20c, 21c; etcetera.

For each pair of corresponding studs, the sum of the distances of the studs 20, 21 from the equatorial axis X is kept substantially constant.

It is pointed out that, in the present context, the sum of the distances from the equatorial axis of the studs of a pair of corresponding studs is defined as "substantially constant" when it is within more or less 10% of a mean value calculated on the corresponding pairs of studs of the entire tread band. Preferably, said sum is then within more or less 5% of the mean value. It should be noted that, according to this definition, the difference between the maximum value and the minimum value of the sums of the distances is respectively around 22.2% and around 10.5% when related to the minimum value.

Preferably, on each row of blocks a pair of corresponding studs is provided, one stud 20 fixed on the first or second block 7, 8 belonging to the first lateral portion 3, and a stud 21 fixed on the first or second block 9, 10 belonging to the second lateral portion 4.

In this way, the same number of rows of blocks comprises the same number of studs independently of the portion of tread band 2 examined. Moreover, in this way, at most one stud is fixed on each block.

Preferably, the studs 20 of the first plurality are disposed on the first lateral portion 3 at six circumferential tracks 22a-22f, which are spaced apart from and substantially parallel to the equatorial axis X, and, similarly, the studs 21 of the second plurality are disposed on the second lateral portion 4 at as many circumferential tracks 23a-23f, which are spaced apart from and substantially parallel to the equatorial axis X, and specularly symmetrical, with respect to the equatorial axis X, to the tracks 22a-22f.

The tracks 22f and 23a represent, respectively for the first and second lateral portions 3, 4, a first circumferential track, which is axially internal, while the tracks 22a and 23f represent, respectively for the first and second lateral portions 3, 4, a second circumferential track, which is axially external, spaced further apart from the equatorial axis X with respect to the tracks 22f and 23a. The remaining circumferential tracks 22b-22e and 23b-23e are all defined as intermediate tracks.

In the preferred exemplary embodiment which is the subject of Figures 1 and 2, the circumferential tracks 22a-22d and 23c-23f are substantially equidistant from one another and respectively involve the first blocks 7 and 9, while the remaining circumferential tracks 22e-22f and 23a-23b respectively involve the second blocks 8 and 10.

The order of positioning of the studs 20 and 21 on the respective circumferential tracks is defined in accordance with the method described below.

Firstly, an ideal arrangement 100 of distribution of the studs on a tread band is imposed, which is constructed by tracing a number of horizontal parallel lines 101-106 corresponding to the number of circumferential tracks 22a-22f or 23a-23f, and then tracing a first base curve 110 intersecting with the horizontal parallel lines at a plurality of intersection points.

Between the six horizontal parallel lines there are identified a first and a second external horizontal parallel line, 101, 106, and a plurality of intermediate horizontal parallel lines 102-105.

In the preferred example described herein, the first base curve 110 is a sinusoidal curve extending between the first and the second horizontal parallel line 101, 106.

Between the intersection points of the first base curve 110 and the horizontal parallel lines 101-106 there is selected a group of successive intersection points, which are indicated in the first module by 111-116, in such a manner that, for each module of the first base curve 110, there is one and only one intersection point which belongs to each horizontal line 101-106.

In particular, the group of successive intersection points is formed, for each module of the first base curve 110, by the intersection points of the first base curve 110 with the external horizontal parallel lines 101, 106 and, in alternating succession, by the intersection points of the first base curve 110 with the intermediate horizontal parallel lines 102-105. In this way there is formed an order of horizontal parallel lines successively involved by the first base curve 110 which, in the case in question, are the lines: 101, 103, 105, 106, 104, 102 and so on, repeating the same sequence (see Figure 3).

Preferably, on the horizontally parallel lines 101-106 there is further traced a second base curve 120, identical with respect to the first base curve 110, but offset horizontally with respect to the latter by a predetermined amount. The predetermined amount is suitably selected in such a manner that the two base curves intersect each other at the two central horizontal parallel lines 103 and 104, in alternating succession.

The second base curve 120 intersects the horizontal parallel lines 101-106 at a plurality of intersection points, some of which, indicated in the first module by 121-126, are selected, by the same selection methods specified above in relation to the first base curve 110, to form part of the group of successive intersection points defined above.

In this way, the order of horizontal parallel lines involved by the first and second base curves 110, 120 and repeated in succession is consequently modified as follows: 101, 104, 103, 102, 105, 101, 106, 103, 104, 105, 102 and 106 (see Figure 4).

It should be noted that the same horizontal line is repeated in the sequence only after at least another four different horizontal lines.

The length of the module of the first and second base curves 110, 120 is suitably selected according to the overall number of studs to be fixed on the tread band.

By way of example, for a tread band on which 130 studs may be fixed, the module of the two base curves 110, 120 will be selected in such a manner that in order to cover the entire circumferential development of the tread band 2 around 5.5 modules are required.

Once the ideal arrangement 100 is completed, there follows a step of implementation thereof on the real tread band 2, in which the first plurality of studs 20 is fixed in succession along the circumferential tracks 22a-22d, from an initial row of blocks 24, according to the order defined by the group of successive intersection points formed by the ideal arrangement 100, in which the horizontal parallel lines 101-106 are substituted by the circumferential tracks 22a-22f.

In addition, the studs 20 are preferably fixed in succession on blocks belonging to successive rows of blocks, so that their positioning is defined substantially unequivocally.

The second plurality of studs 21 is fixed in succession, still starting from the initial row of blocks 24, along the circumferential tracks 23a-23f according to the order defined by the group of successive intersection points formed by the ideal arrangement 100, in which the horizontal parallel lines 101-106 are substituted by the circumferential tracks 23a-23f.

The studs 21 are in addition fixed at the same rows of blocks which are involved by the first plurality of studs 20.

In this way the studded tyre 1 is obtained which is described in detail above.

For greater clarity, in Figures 1 and 2, a first and second curve 110' and 120' are indicated which connect the studs 20 and 21 with one another, and which represent the implementation on the tread band 2 of the first and second base curves 110 and 120.

It should be noted that, advantageously, each stud 20, 21 is separated from another stud 20, 21 fixed on the same circumferential track by at least five rows of blocks. More precisely, on the same circumferential track the studs succeed one another at a regular rhythm of 5 and 7 rows of blocks.

This means that, for footprint areas having a measurement of less than five rows of blocks, each stud, when in a footprint area, is axially offset with respect to the other studs present in the same footprint area.

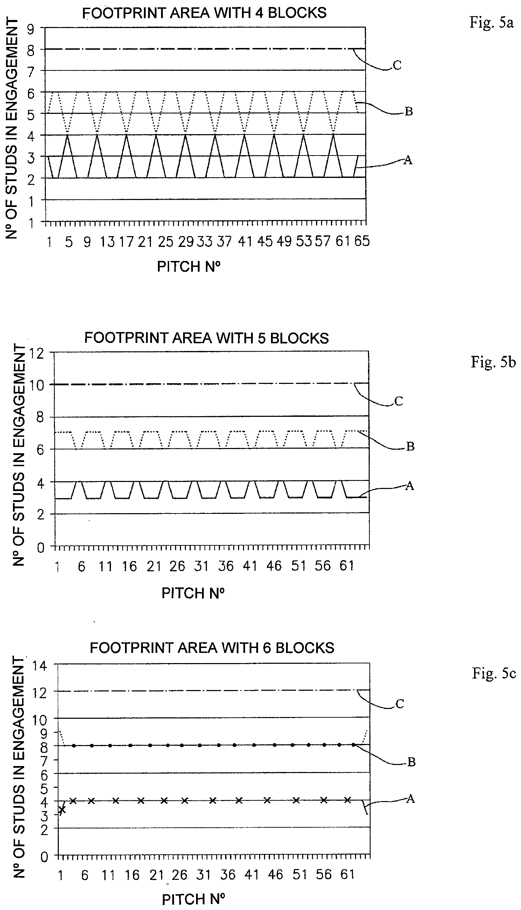

Moreover, owing to this arrangement, the number of studs in engagement on the roadbed is constant along the entire circumferential development of the tread band 2, equal to the number of rows of blocks considered, as is clearly shown in Figures 5a-5c, in which is shown the number of studs 20 and 21 in engagement on an icy roadbed during the rolling of the tyre 1, considering footprint areas formed, respectively, by 4, 5 and 6 rows of blocks.

On examining Figures 5a-5c, in which A and B indicate the number of studs in engagement (in the case where a constant number of blocks equal respectively to 4, 5 and 6 are present in a footprint area) respectively at the blocks 8 and 10 and the blocks 7 and 9, along the circumferential development of the tread band 2 (according to the pitch number), and C indicates the sum of A and B; it will be noted that the course of the number of studs in engagement on the blocks 8 and 10 is, with respect to half the total number of studs in engagement in the footprint area, of opposite phase with respect to the blocks 7 and 9 and, the sum C thereof remains effectively constant in the rolling motion of the tyre 1.

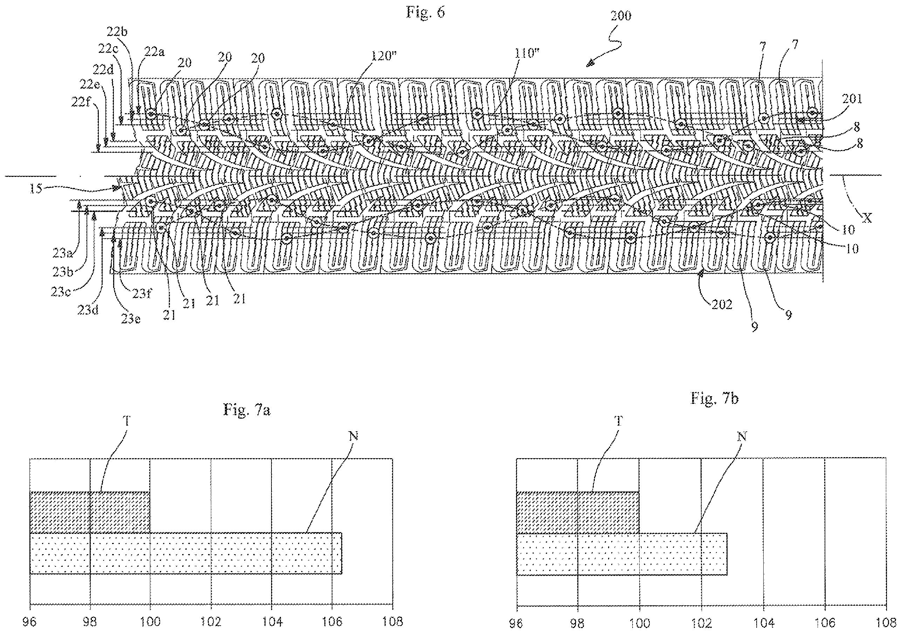

In Figure 6, the reference 200 indicates overall a studded tyre representing a second exemplary embodiment of the present invention, in which details similar to the tyre 1 are indicated by the same reference numbers.

The tyre 200 comprises a tread band 201 on which is defined a directional tread pattern 202, different from the tread pattern 17 of the tread band 2 because of a different configuration of the blocks and of the grooves which separate them.

In particular, the first blocks 7, 9 (and, correspondingly, also the second blocks 8, 10) extend towards the equatorial axis X, in alternating succession, according to two different axial measurements.

For this reason the circumferential tracks 22d (and, similarly, 23c) are represented by a dashed line passing, in alternating succession, through the first block 7 (9) and the second block 8 (10).

Except for this detail, the arrangement of the studs 20 and 21 on the tread band 201 is obtained by the same methods as the tyre 1, implementing the same ideal arrangement 100.

In Figure 6, the references 110" and 120" respectively indicate the two curves respectively representing the implementation of the first and second base curves 110, 120.

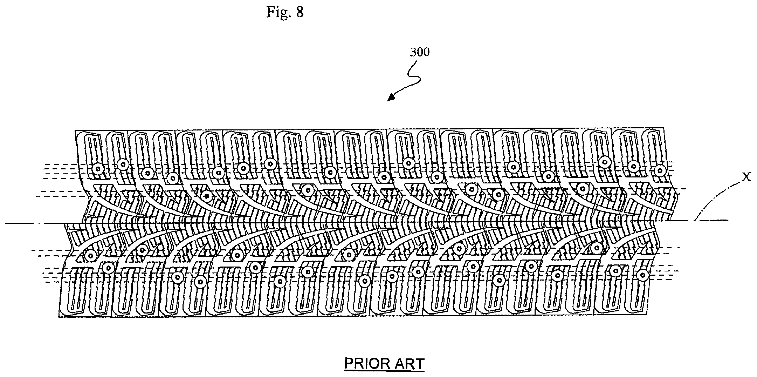

The studded tyre 200 was then subjected to braking and traction tests, the results of which, compared with those obtained for a studded tyre 300, designed according to the prior art and shown schematically in Figure 8, are given respectively in Figures 7a and 7b.

It should be noted that the studded tyre 300 has the same tread pattern and the same type and number of studs as the tyre 200, differing exclusively in the different arrangement of the studs on the tread band.

As can easily be seen from Figures 7a, 7b, in which T identifies the performance, related to 100, of the studded tyre of Figure 8, and N identifies the performance of the tyre 200, the studded tyre 200 exhibits an improvement in performance during braking of around 6.5%, and a concomitant improvement in performance during traction of 3%.

It should be noted that the present invention lends itself to numerous alternative embodiments, although all based on the same inventive concept indicated above.

For example, base curves of different extent may be provided, modular or otherwise, also in the form of a broken line. In addition, it is also possible to provide only one base curve, for example the first base curve described above, or even a number of base curves greater than two.

Furthermore, the pairs of corresponding studs may be fixed in succession to rows of blocks which are not necessarily consecutive.

In a further preferred embodiment, the parallel lines and the corresponding circumferential tracks may be 8 in number.

## Claims

1. A method for designing a studded tyre (1; 200), comprising a step for providing an ideal arrangement (100) for distribution of a plurality of studs on a tread band and a step for implementation of that ideal arrangement on a real tread band (2; 201) of said tyre, wherein said step for provision of an ideal arrangement includes the steps of:
- defining a predetermined number of horizontal parallel lines (101-106),
- defining at least a first base curve (110) which intersects with said horizontal parallel lines at a plurality of intersection points,
- selecting from said plurality a group of successive intersection points (111-116),
and wherein said implementation step includes the steps of:
- providing a tread band (2; 201), on which there are defined a first and a second lateral portion (3, 4) which are symmetrically opposed with respect to an equatorial axis (X) of said tyre,
- defining, on each of said first and second lateral portions, a plurality of circumferential tracks (22a-22f; 23a-23f) which are spaced apart from said equatorial axis and which correspond to said horizontal parallel lines,
- fixing a first plurality of studs (20) along the circumferential tracks inside said first lateral portion, from an initial row of blocks (24), in which said studs are fixed in succession along circumferential tracks which are identified in accordance with the order defined by said group of successive intersection points,
- fixing a second plurality of studs (21) along the circumferential tracks inside said second lateral portion, from said initial row of blocks (24), in which said studs are fixed in succession along circumferential tracks which are identified in accordance with the order defined by said group of successive intersection points and in accordance with the same rows of blocks which are involved by said first plurality of studs.

2. A method according to claim 1, wherein the circumferential tracks (22a-22f) which are formed inside said first lateral portion (3), respectively, are specularly symmetrical, with respect to said equatorial axis, relative to the circumferential tracks (23a-23f) which are formed inside said second lateral portion (4).

3. A method according to claim 1 or claim 2, wherein said circumferential tracks (22a-22f; 23a-23f) are defined inside said first and second lateral portions so as to involve circumferentially successive blocks (7, 8, 9, 10) which are formed on said tread band.

4. A method according to any one of the preceding claims, wherein said first base curve is of modular extent.

5. A method according to claim 4, wherein said first base curve is of sinusoidal extent.

6. A method according to claim 4 or claim 5, wherein said group of successive intersection points is selected so that, for each module of said first base curve, there is selected one and only one intersection point belonging to each horizontal line.

7. A method according to any one of the preceding claims, wherein, in said horizontal parallel lines, there are identified a first and a second horizontal line (101, 106) which are external, and a plurality of intermediate horizontal lines (102-105), which are between said first and second horizontal lines, and said first base curve extends between said first and second horizontal lines.

8. A method according to any one of the preceding claims, wherein there is further defined, on said ideal arrangement (100), a second base curve (120) which intersects with said horizontal parallel lines at a plurality of intersection points and said group of successive intersection points comprises intersection points with respect to said horizontal parallel lines of both said first base curve (111-116) and said second base curve (121-126).

9. A method according to any one of the preceding claims, wherein, for each row of blocks of the tread band, there is fixed the same number of studs of said first plurality.

10. A studded tyre (1, 200) comprising:
- a tread band (2; 201), on which there are defined, at the symmetrically opposite side with respect to an equatorial axis (X) of said tread band, a first and a second lateral portion (3, 4),
- a first plurality of studs (20) which is fixed in succession along a circumferential development of said tread band inside said first lateral portion, each stud (20) of said first plurality, when in a footprint area, being axially offset with respect to the other studs of said first plurality present in the same footprint area,
- a second plurality of studs (21) which is fixed in succession along the circumferential development of said tread band inside said second lateral portion,
there corresponding, to each stud (20) of said first plurality, a stud (21) of said second plurality in order to form a pair of corresponding studs (20a, 21a; 20b, 21b; 20c, 21c), said corresponding studs belonging to the same radial plane or being circumferentially offset of less than a pitch of blocks forming said tread band, **characterised in that** the sum of the distances from said equatorial axis (X) of the studs of each of said pairs of corresponding studs is kept between 90% and 110% of a mean value calculated from all the pairs of corresponding studs (20a, 21a; 20b, 21b; 20c, 21c) on said tread band (2, 201).

11. A studded tyre according to claim 10, wherein each stud (21) of said second plurality, when in a footprint area, is axially offset with respect to the other studs of said second plurality present in the same footprint area.

12. A studded tyre according to any one of claims 10 to 11, wherein said first plurality of studs (20) is fixed, from an initial row of blocks (24), in modular succession along the circumferential development of said tread band.

13. A studded tyre according to any one of claims 10 to 12, wherein said second plurality of studs (21) is fixed, from an initial row of blocks (24), in modular succession along the circumferential development of said tread band.

14. A studded tyre according to any one of claims 10 to 13, wherein each stud (20, 21) of said first and second pluralities is fixed to a respective block (7, 8, 9, 10) which is formed on said tread band.

15. A studded tyre according to any one of claims 10 to 14, wherein said first and second pluralities of studs (20, 21) are fixed to said tread band in such a manner that the number of studs present in a footprint area, is constant, except for a pair of corresponding studs, along the circumferential development of said tread band.

16. A studded tyre according to claim 15, wherein the number of studs present in a footprint area, is constant along the circumferential development of said tread band.

17. A studded tyre according to any one of claims 10 to 16, wherein said tread band comprises a first plurality of blocks (5) which are provided in succession along the circumferential development of said tread band at said first lateral portion (3), a second plurality of blocks (6) which are provided in succession along the circumferential development of said tread band at said second lateral portion (4), there corresponding to each block of said first plurality at least one block of said second plurality, substantially belonging to the same radial plane, so as to form a row of blocks, there being fixed to each row of blocks the same number of pairs of corresponding studs.

18. A studded tyre according to any one of claims 10 to 17, wherein the studs of said first plurality of studs (20) are fixed at a predetermined number of circumferential tracks (22a-22f) which are spaced apart from said equatorial axis inside said first lateral portion.

19. A studded tyre according to any one of claims 10 to 18, wherein the studs (20) of said first plurality are fixed, from an initial row of blocks (24), successively along the circumferential development of said tread band in accordance with a first base curve (110'; 110") of modular extent.

20. A studded tyre according to claim 19, wherein the studs (20) of said first plurality are positioned at intersection points (20a, 20c) of said first base curve (110') with said circumferential tracks.

21. A studded tyre according to any one of claims 18 to 20, wherein said circumferential tracks (22a-22f) inside the first lateral portion (3) are even in number.

22. A studded tyre according to any one of claims 19 to 21, wherein the studs (20) of said first plurality are positioned at intersection points of said circumferential tracks (22a-22f) with said first base curve (110'; 110") and with a second base curve (120'; 120") of modular extent.

23. A studded tyre according to claim 22, wherein the studs (20) of said first plurality are positioned at the intersection points of said first base curve (110'; 110") and second base curve (120'; 120") with said first and second circumferential tracks (22a, 22f) and, in alternating succession, at intersection points of said first base curve (110'; 110") and second base curve (120'; 120") with intermediate circumferential tracks (22b-22e) between said first and second circumferential tracks.

24. A studded tyre according to any one of claims 18 to 23, wherein each stud (20) of said first plurality is spaced apart by at least five rows of blocks from any other stud which is fixed to the same circumferential track.

## Patentansprüche

1. Verfahren zur Konstruktion eines Spikereifens (1; 200), umfassend einen Schritt zur Bereitstellung einer idealen Anordnung (100) zur Verteilung einer Vielzahl von Bolzen an einem Laufflächenring, und einen Schritt zur Implementierung dieser idealen Anordnung an einem realen Laufflächenring (2; 201) des Reifens, wobei der Schritt zur Bereitstellung einer idealen Anordnung die folgenden Schritte umfasst:
- Definieren einer vorbestimmten Anzahl von parallelen horizontalen Linien (101-106),
- Definieren zumindest einer ersten Basiskurve (110), welche die parallelen horizontalen Linien an einer Vielzahl von Schnittpunkten schneidet,
- Auswählen einer Gruppe von aufeinander folgenden Schnittpunkten (111-116) aus der Vielzahl, und wobei der Implementierungsschritt die folgenden Schritte umfasst:
- Bereitstellen eines Laufflächenrings (2; 201), an dem ein erster und zweiter seitlicher Abschnitt (3, 4) definiert sind, die sich in Bezug auf eine Äquatorialebenenachse (X) des Reifens symmetrisch gegenüberliegen,
- Definieren, an jedem der ersten und zweiten seitlichen Abschnitte, eine Vielzahl von umlaufenden Spuren (22a-22f; 23a-23f), die von der Äquatorialebenenachse beabstandet sind und die den parallelen horizontalen Linien entsprechen,
- Fixieren einer ersten Vielzahl von Spikes (20) entlang der umlaufenden Spuren innerhalb des ersten seitlichen Abschnitts, von einer ersten Reihe von Blöcken (24), in welchen die Spikes aufeinander folgend entlang umlaufender Spuren fixiert werden, die in Übereinstimmung mit der Reihenfolge identifiziert werden, die durch die Gruppe von aufeinander folgenden Schnittpunkten definiert wird,
- Fixieren einer zweiten Vielzahl von Spikes (21) entlang der umlaufenden Spuren innerhalb des zweiten seitlichen Abschnitts, von der ersten Reihe von Blöcken (24), in welchen die Spikes aufeinander folgend entlang umlaufender Spuren fixiert werden, die in Übereinstimmung mit der Reihenfolge identifiziert werden, die durch die Gruppe von aufeinander folgenden Schnittpunkten und in Übereinstimmung mit derselben Reihe von Blöcken, die von der ersten Vielzahl von umfasst sind, definiert wird,.

2. Verfahren nach Anspruch 1, wobei die umlaufenden Spuren (22a-22f), die innerhalb des ersten seitlichen Abschnitts (3) ausgebildet sind, relativ zu den umlaufenden Spuren (23a-23f), die innerhalb des zweiten seitlichen Abschnitts (4) ausgebildet sind, jeweils spiegelsymmetrisch in Bezug auf die Äquatorialebenenachse sind.

3. Verfahren nach Anspruch 1 oder Anspruch 2, wobei die umlaufenden Spuren (22a-22f; 23a-23f) innerhalb der ersten und zweiten seitlichen Abschnitte so definiert sind, dass sie in umlaufender Richtung aufeinander folgende Blöcke (7, 8, 9, 10) einschließen, die an dem Laufflächenring ausgebildet sind.

4. Verfahren nach einem der vorhergehenden Ansprüche, wobei die erste Basiskurve modular verläuft.

5. Verfahren nach Anspruch 4, wobei die erste Basiskurve sinusförmig verläuft.

6. Verfahren nach Anspruch 4 oder Anspruch 5, wobei die Gruppe von aufeinander folgenden Schnittpunkten so ausgewählt wird, dass für jedes Modul der ersten Basiskurve nur ein einziger Schnittpunkt ausgewählt wird, der zu jeder horizontalen Linie gehört.

7. Verfahren nach einem der vorhergehenden Ansprüche, wobei in den parallelen horizontalen Linien eine erste und eine zweite horizontale Linie (101, 106) identifiziert werden, die außen liegen, und eine Vielzahl von dazwischenliegenden horizontalen Linien (102-105), die sich zwischen den ersten und zweiten horizontalen Linien befinden, und die erste Basiskurve sich zwischen der ersten und zweiten horizontalen Linie erstreckt.

8. Verfahren nach einem der vorhergehenden Ansprüche, wobei an der idealen Anordnung (100) ferner eine zweite Basiskurve (120) definiert wird, die sich mit parallelen horizontalen Linien an einer Vielzahl von Schnittpunkten schneidet, und die Gruppe von aufeinander folgenden Schnittpunkten Schnittpunkte in Bezug auf die parallelen horizontalen Linien der ersten Basiskurve (111-116) und der zweiten Basiskurve (121-126) umfasst.

9. Verfahren nach einem der vorhergehenden Ansprüche, wobei, für jede Reihe von Blöcken des Laufflächenrings, dieselbe Anzahl von Spikes der ersten Vielzahl fixiert wird.

10. Spikereifen (1, 200) umfassend:
- einen Laufflächenring (2; 201), an dem an symmetrisch gegenüberliegenden Seiten in Bezug auf eine Äquatorialebenenachse (X) des Laufflächenrings ein erster und zweiter seitlicher Abschnitt (3, 4) definiert sind,
- eine erste Vielzahl von Spikes (20), die in Abfolge entlang einer umlaufenden Entwicklung des Laufflächenrings innerhalb des ersten seitlichen Abschnitts fixiert wird, wobei jeder Spike (20) der ersten Vielzahl, wenn er sich in einer Standfläche befindet, axial in Bezug auf die anderen Spikes der ersten Vielzahl, die in derselben Standfläche vorliegen, versetzt ist,
- eine zweite Vielzahl von Spikes (21), die in Abfolge entlang einer umlaufenden Entwicklung des Laufflächenrings innerhalb des zweiten seitlichen Abschnitts fixiert wird, wobei jedem Spike (20) der ersten Vielzahl ein Spike (21) der zweiten Vielzahl entspricht, um ein Paar von einander entsprechenden Spikes (20a, 21a; 20b, 21b; 20c, 21c) zu bilden, wobei die einander entsprechenden Spikes zu derselben radialen Ebene gehören oder in umlaufender Richtung um weniger als eine Weite der Blöcke, die den Laufflächenring bilden, versetzt sind, **dadurch gekennzeichnet, dass** die Summe der Abstände von der Äquatorialebenenachse (X) der Spikes der Paare von einander entsprechenden Spikes zwischen 90 % und 110 % eines Mittelwerts gehalten wird, der aus allen Paaren von einander entsprechenden Spikes (20a, 21a; 20b, 21b; 20c, 21c) an dem Laufflächenring (2, 201) berechnet wird.

11. Spikereifen nach Anspruch 10, wobei jeder Spike (21) der zweiten Vielzahl, wenn er sich in einer Standfläche befindet, axial in Bezug auf die anderen Spikes der zweiten Vielzahl, die in derselben Standfläche vorliegen, versetzt ist.

12. Spikereifen nach einem der Ansprüche 10 bis 11, wobei die erste Vielzahl von Spikes (20) von einer ersten Reihe von Blöcken (24) in modularer Abfolge entlang der umlaufenden Entwicklung des Laufflächenrings fixiert ist.

13. Spikereifen nach einem der Ansprüche 10 bis 12, wobei die zweite Vielzahl von Spikes (21) von einer ersten Reihe von Blöcken (24) in modularer Abfolge entlang der umlaufenden Entwicklung des Laufflächenrings fixiert ist.

14. Spikereifen nach einem der Ansprüche 10 bis 13, wobei jeder Spike (20, 21) der ersten und zweiten Vielzahlen an einem jeweiligen Block (7, 8, 9, 10) fixiert ist, der an dem Laufflächenring ausgebildet ist.

15. Spikereifen nach einem der Ansprüche 10 bis 14, wobei die ersten und zweiten Vielzahlen von Spikes (20, 21) an dem Laufflächenring auf solche Weise fixiert sind, dass die Anzahl der Spikes, die in einer Standfläche vorliegen, konstant ist, mit Ausnahme eines Paars von einander entsprechenden Spikes entlang der umlaufenden Entwicklung des Laufflächenrings.

16. Spikereifen nach Anspruch 15, wobei die Anzahl von Spikes, die in einer Standfläche vorliegen, entlang der umlaufenden Entwicklung des Laufflächenrings konstant sind.

17. Spikereifen nach einem der Ansprüche 10 bis 16, wobei der Laufflächenring umfasst: eine erste Vielzahl von Blöcken (5), die in Abfolge entlang der umlaufenden Entwicklung des Laufflächenrings an dem ersten seitlichen Abschnitt (3) vorgesehen sind, eine zweite Vielzahl von Blöcken (6), die in Abfolge entlang der umlaufenden Entwicklung des Laufflächenrings an dem zweiten seitlichen Abschnitt (4) vorgesehen sind, wobei jedem Block der ersten Vielzahl zumindest ein Block der zweiten Vielzahl entspricht, der im Wesentlichen zu derselben radialen Ebene gehören, um so eine Reihe von Blöcken zu bilden, wobei in jeder Reihe Blöcke derselben Anzahl von Paaren von einander entsprechenden Spikes fixiert sind.

18. Spikereifen nach einem der Ansprüche 10 bis 17, wobei die Spikes der ersten Vielzahl von Spikes (20) an einer vorbestimmten Anzahl von umlaufenden Spuren (22a-22f) fixiert sind, die von der Äquatorialebenenachse innerhalb des ersten seitlichen Abschnitts beabstandet sind.

19. Spikereifen nach einem der Ansprüche 10 bis 18, wobei die Spikes (20) der ersten Vielzahl von einer anfänglichen Reihe von Blöcken (24) aufeinander folgend entlang der umlaufenden Entwicklung des Laufflächenrings in Übereinstimmung mit einer ersten Basiskurve (110'; 110") fixiert sind, die modular verläuft.

20. Spikereifen nach Anspruch 19, wobei die Spikes (20) der ersten Vielzahl an Schnittpunkten (20a, 20c) der ersten Basiskurven (110') mit den umlaufenden Spuren positioniert sind.

21. Spikereifen nach einem der Ansprüche 18 bis 20, wobei die umlaufenden Spuren (22a-22f) innerhalb des ersten seitlichen Abschnitts (3) eine gerade Anzahl bilden.

22. Spikereifen nach einem der Ansprüche 19 bis 21, wobei die Spikes (20) der ersten Vielzahl an Schnittpunkten der umlaufenden Spuren (22a-22f) mit der ersten Basiskurve (110'; 110") und mit einer zweiten Basiskurve (120' 120"), die modular verläuft, positioniert sind.

23. Spikereifen nach Anspruch 22, wobei die Spikes (20) der ersten Vielzahl an den Schnittpunkten der ersten Basiskurve (110'; 110") und der zweiten Basiskurve (120' 120") mit den ersten und zweiten umlaufenden Spuren (22a, 22f) und, in wechselnder Abfolge, an Schnittpunkten der ersten Basiskurve (110' 110") und der zweiten Basiskurve (120' 120") mit dazwischenliegenden umlaufenden Spuren (22b-22e) zwischen den ersten und zweiten umlaufenden Spuren positioniert sind.

24. Spikereifen nach einem der Ansprüche 18 bis 23, wobei jeder Spike (20) der ersten Vielzahl um zumindest fünf Reihen von Blöcken von jedem anderen Spike beabstandet ist, der an derselben umlaufenden Spur fixiert ist.

## Revendications

1. Procédé de conception d'un pneu à crampons (1 ; 200), comprenant une étape pour fournir un agencement idéal (100) pour la distribution d'une pluralité de crampons sur une bande de roulement et une étape de mise en oeuvre de cet agencement idéal sur une bande de roulement réelle (2 ; 201) dudit pneu, où ladite étape de fourniture d'un agencement idéal comporte les étapes qui consistent :
- à définir un nombre prédéterminé de lignes parallèles horizontales (101-106),
- à définir au moins une première courbe de base (110) qui coupe lesdites lignes parallèles horizontales au niveau d'une pluralité de points d'intersection,
- à sélectionner, parmi ladite pluralité, un groupe de points d'intersection successifs (111-116),
et où ladite étape de mise en oeuvre comporte les étapes qui consistent :
- à fournir une bande de roulement (2 ; 201), sur laquelle sont définies des première et deuxième parties latérales (3, 4) qui sont symétriquement opposées par rapport à un axe équatorial (X) dudit pneu,
- à définir, sur chacune desdites première et deuxième parties latérales, une pluralité de pistes circonférentielles (22a-22f ; 23a-23f) qui sont espacées dudit axe équatorial et qui correspondent auxdites lignes parallèles horizontales,
- à fixer une première pluralité de crampons (20) le long des pistes circonférentielles à l'intérieur de ladite première partie latérale, à partir d'une rangée initiale de blocs (24), où lesdits crampons sont fixés successivement le long de pistes circonférentielles qui sont identifiées conformément à l'ordre défini par ledit groupe de points d'intersection successifs,
- à fixer une deuxième pluralité de crampons (21) le long des pistes circonférentielles à l'intérieur de ladite deuxième partie latérale, à partir de ladite rangée initiale de blocs (24), où lesdits crampons sont fixés successivement le long de pistes circonférentielles qui sont identifiées conformément à l'ordre défini par ledit groupe de points d'intersection successifs et conformément aux mêmes rangées de blocs qui sont impliquées par ladite première pluralité de crampons.

2. Procédé selon la revendication 1, dans lequel les pistes circonférentielles (22a-22f) qui sont formées à l'intérieur de ladite première partie latérale (3), respectivement, sont spectaculairement symétriques, par rapport audit axe équatorial, relativement aux pistes circonférentielles (23a-23f) qui sont formées à l'intérieur de ladite deuxième partie latérale (4).

3. Procédé selon la revendication 1 ou 2, dans lequel lesdites pistes circonférentielles (22a-22f ; 23a-23f) sont définies à l'intérieur desdites première et deuxième parties latérales de manière à impliquer des blocs circonférentiellement successifs (7, 8, 9, 10) qui sont formés sur ladite bande de roulement.

4. Procédé selon l'une quelconque des revendications précédentes, dans lequel ladite première courbe de base est d'étendue modulaire.

5. Procédé selon la revendication 4, dans lequel ladite première courbe de base est d'étendue sinusoïdale.

6. Procédé selon la revendication 4 ou 5, dans lequel ledit groupe de points d'intersection successifs est sélectionné de sorte que, pour chaque module de ladite première courbe de base, on sélectionne un et un seul point d'intersection appartenant à chaque ligne horizontale.

7. Procédé selon l'une quelconque des revendications précédentes, dans lequel, dans lesdites lignes parallèles horizontales, on identifie des première et deuxième lignes horizontales (101, 106) qui sont externes, et une pluralité de lignes horizontales intermédiaires (102-105), qui se trouvent entre lesdites première et deuxième lignes horizontales, et ladite première courbe de base s'étend entre lesdites première et deuxième lignes horizontales.

8. Procédé selon l'une quelconque des revendications précédentes, dans lequel on définit en outre, sur ledit agencement idéal (100), une deuxième courbe de base (120) qui coupe lesdites lignes parallèles horizontales au niveau d'une pluralité de points d'intersection et ledit groupe de points d'intersection successifs comprend des points d'intersection par rapport auxdites lignes parallèles horizontales à la fois de ladite première courbe de base (111-116) et de ladite deuxième courbe de base (121-126).

9. Procédé selon l'une quelconque des revendications précédentes, dans lequel, pour chaque rangée de blocs de la bande de roulement, on fixe le même nombre de crampons de ladite première pluralité.

10. Pneu à crampons (1, 200) comprenant :
- une bande de roulement (2 ; 201), sur laquelle on définit, au niveau du côté symétriquement opposé par rapport à un axe équatorial (X) de ladite bande de roulement, des première et deuxième parties latérales (3, 4),
- une première pluralité de crampons (20) qui est fixée successivement le long d'un développement circonférentiel de ladite bande de roulement à l'intérieur de ladite première partie latérale, chaque crampon (20) de ladite première pluralité, lorsqu'il est dans une zone d'empreinte, étant axialement décalé par rapport aux autres crampons de ladite première pluralité présente dans la même zone d'empreinte,
- une deuxième pluralité de crampons (21) qui est fixée successivement le long du développement circonférentiel de ladite bande de roulement à l'intérieur de ladite deuxième partie latérale,
un crampon (21) de ladite deuxième pluralité correspond à chaque crampon (20) de ladite première pluralité afin de former une paire de crampons correspondants (20a, 21a ; 20b, 21b ; 20c, 21c), lesdits crampons correspondants appartenant au même plan radial ou étant décalés circonférentiellement de moins d'un pas de blocs formant ladite bande de roulement, **caractérisé en ce que** la somme des distances par rapport audit axe équatorial (X) des crampons de chacune desdites paires de crampons correspondants est maintenue entre 90% et 110% d'une valeur moyenne calculée à partir de toutes les paires de crampons correspondants (20a, 21a ; 20b, 21b ; 20c, 21c) sur ladite bande de roulement (2, 201).

11. Pneu à crampons selon la revendication 10, dans lequel chaque crampon (21) de ladite deuxième pluralité, lorsqu'il est dans une zone d'empreinte, est décalé axialement par rapport aux autres crampons de ladite deuxième pluralité présente dans la même zone d'empreinte.

12. Pneu à crampons selon l'une quelconque des revendications 10 à 11, dans lequel ladite première pluralité de crampons (20) est fixée, à partir d'une rangée initiale de blocs (24), en succession modulaire le long du développement circonférentiel de ladite bande de roulement.

13. Pneu à crampons selon l'une quelconque des revendications 10 à 12, dans lequel ladite deuxième pluralité de crampons (21) est fixée, à partir d'une rangée initiale de blocs (24), en succession modulaire le long du développement circonférentiel de ladite bande de roulement.

14. Pneu à crampons selon l'une quelconque des revendications 10 à 13, dans lequel chaque crampon (20, 21) desdites première et deuxième pluralités est fixé à un bloc respectif (7, 8, 9, 10) qui est formé sur ladite bande de roulement.

15. Pneu à crampons selon l'une quelconque des revendications 10 à 14, dans lequel lesdites première et deuxième pluralités de crampons (20, 21) sont fixées à ladite bande de roulement de telle manière que le nombre de crampons présents dans une zone d'empreinte soit constant, à l'exception d'une paire de crampons correspondants, le long du développement circonférentiel de ladite bande de roulement.

16. Pneu à crampons selon la revendication 15, dans lequel le nombre de crampons présents dans une zone d'empreinte est constant le long du développement circonférentiel de ladite bande de roulement.

17. Pneu à crampons selon l'une quelconque des revendications 10 à 16, dans lequel ladite bande de roulement comprend une première pluralité de blocs (5) qui sont prévus successivement le long du développement circonférentiel de ladite bande de roulement au niveau de ladite première partie latérale (3), une deuxième pluralité de blocs (6) qui sont prévus successivement le long du développement circonférentiel de ladite bande de roulement au niveau de ladite deuxième partie latérale (4), au moins un bloc de ladite deuxième pluralité, appartenant essentiellement au même plan radial, correspond à chaque bloc de ladite première pluralité de manière à former une rangée de blocs, le même nombre de paires de crampons correspondants est fixé à chaque rangée de blocs.

18. Pneu à crampons selon l'une quelconque des revendications 10 à 17, dans lequel les crampons de ladite première pluralité de crampons (20) sont fixés au niveau d'un nombre prédéterminé de pistes circonférentielles (22a-22f) qui sont espacées dudit axe équatorial à l'intérieur de ladite première partie latérale.

19. Pneu à crampons selon l'une quelconque des revendications 10 à 18, dans lequel les crampons (20) de ladite première pluralité sont fixés, à partir d'une rangée initiale de blocs (24), successivement le long du développement circonférentiel de ladite bande de roulement conformément à une première courbe de base (110' ; 110") d'étendue modulaire.

20. Pneu à crampons selon la revendication 19, dans lequel les crampons (20) de ladite première pluralité sont positionnés au niveau de points d'intersection (20a, 20c) de ladite première courbe de base (110') avec lesdites pistes circonférentielles.

21. Pneu à crampons selon l'une quelconque des revendications 18 à 20, dans lequel lesdites pistes circonférentielles (22a-22f) à l'intérieur de la première partie latérale (3) sont en nombre pair.

22. Pneu à crampons selon l'une quelconque des revendications 19 à 21, dans lequel les crampons (20) de ladite première pluralité sont positionnés au niveau de points d'intersection desdites pistes circonférentielles (22a-22f) avec ladite première courbe de base (110' ; 110") et avec une deuxième courbe de base (120' ; 120 ") d'étendue modulaire.

23. Pneu à crampons selon la revendication 22, dans lequel les crampons (20) de ladite première pluralité sont positionnés au niveau de points d'intersection de ladite première courbe de base (110' ; 110") et de la deuxième courbe de base (120' ; 120") avec lesdites première et deuxième pistes circonférentielles (22a, 22f) et, en succession alternée, au niveau de points d'intersection de ladite première courbe de base (110' ; 110") et de la deuxième courbe de base (120' ; 120") avec des pistes circonférentielles intermédiaires (22b-22e) entre lesdites première et deuxième pistes circonférentielles.

24. Pneu à crampons selon l'une quelconque des revendications 18 à 23, dans lequel chaque crampon (20) de ladite première pluralité est espacé d'au moins cinq rangées de blocs de tout autre crampon qui est fixé à la même piste circonférentielle.
